# EUROPÄISCHE PATENTANMELDUNG

(11) **EP 4 428 722 A1**
(43) Veröffentlichungstag der Anmeldung: **11.09.2024**
(21) Anmeldenummer: 23161105.4
(22) Anmeldetag: 10.03.2023
(51) Int. Cl.: G06F 21/10, G05B 19/02

(54) **KOMBINIERTE LIZENZEN, UM DIE LIZENZIERUNG MEHRERER LIZENZPFLICHTIGER SOFTWAREKOMPONENTEN ZU ERLEICHTERN**

(71) Anmelder: Siemens Aktiengesellschaft, 80333 München (DE)
(72) Erfinder: Kirstenpfad, Daniel, 96138 Burgebrach (DE); Laudenberg, Thomas, 90592 Schwarzenbruck (DE)
(74) Vertreter: Siemens Patent Attorneys

(57) **Zusammenfassung**

Ein computerimplementierter Ansatz zur Erstellung von kombinierten Lizenzen für lizenzpflichtige Softwares und Softwarekomponenten, wobei das Verfahren Folgendes umfasst: Initiieren der Erstellung einer kombinierten Lizenz durch einen Benutzer auf einem Server, der für die Erstellung von kombinierten Lizenzen für lizenzierte Softwares und Softwarekomponenten konfiguriert ist; Auswählen einer Vielzahl von Softwareelementen aus einer Liste von Softwareelementen, die aus einer Liste auf dem Server ausgewählt werden können, durch den Benutzer, wobei ein Softwareelement eine lizenzierte Software oder Softwarekomponente ist und eine Lizenz einen Lizenzmodus und einen oder mehrere entsprechende Lizenzparameter umfasst; Auswählen eines Lizenzmodus aus dem Lizenzmodus oder den Lizenzmodi, die den ausgewählten Softwareelementen entsprechen, durch den Benutzer; Eingeben eines Werts für einen Lizenzparameter, der dem ausgewählten Lizenzmodus entspricht, durch den Benutzer; Erzeugen einer kombinierten Lizenz durch den Server, die Lizenzinformationen, die den Lizenzen der ausgewählten Softwareelemente entsprechen, einen ausgewählten Lizenzmodus und einen Lizenzparameterwert umfasst.

## Beschreibung

### GEBIET DER ERFINDUNG

Die vorliegende Erfindung bezieht sich auf den Bereich der Automatisierung von Industriesystemen und insbesondere auf die Situation, in der Industriesysteme komplexe modulare Automatisierungsanwendungen verwenden, für die Lizenzen für jedes ihrer Softwaremodule oder -komponenten erforderlich sind.

### TECHNISCHER HINTERGRUND

In den letzten Jahren sind die Systeme zur Automatisierung von Industrieprozessen immer komplexer geworden. Die Einführung intelligenter Fabriken, in denen Maschinen zu digital gesteuerten Maschinen werden, die über Kommunikationsmittel verfügen, mit denen sie in ein komplexes und dezentralisiertes Design- und Produktionssystem eingebunden werden können, hat dazu geführt, dass die Design- und Produktionsumgebung mit zahlreichen Softwareprogrammen oder Softwaremodulen ausgestattet wird, die mit der Produktion, dem Design, der Verwaltung des Maschinenparks oder der Verwaltung einer Produktionsstätte in Verbindung stehen. Beispielsweise kann es vorkommen, dass ein und dieselbe Maschine im System verschiedene Softwarelösungen oder Module in ihrer Software oder ihren Softwaremodulen beherbergt, die jeweils von einem anderen Hersteller/Verkäufer stammen können.

Daraus ergibt sich der Bedarf, gleichzeitig auf der Ebene einer Maschine, eines Maschinenparks, einer Produktionsstätte oder eines Unternehmens mehrere Softwares und/oder Softwaremodule zu verwalten, die unterschiedlichen Lizenzen unterliegen. Beispielsweise kann der Hersteller einer CNC-Maschine seinem Endkunden Software für diese Maschine liefern, während die auf dieser Maschine vorhandenen Softwaremodule von verschiedenen Softwareanbietern stammen können, wodurch bestimmte Lizenzen von Unterlizenzen abhängig werden (z. B. erfordert Modul A die Lizenz von Modul B, Modul B die Lizenz von Modul C usw.). Das Ergebnis ist eine zunehmend komplexe Lizenzarchitektur.

Dies gilt umso mehr, als dass jede dieser Unterlizenzen einem anderen Geschäfts-/Lizenzmodell unterliegen kann als die anderen Unterlizenzen. So kann es sich beispielsweise um ein Abonnement über einen bestimmten Zeitraum, um eine Zahlung für die Nutzung, die nur bei jeder Implementierung Kosten verursacht, um einen Software-as-a-Service (SaaS)-Ansatz usw. handeln. Die meisten Unterlizenzen sind in der Lage, eine bestimmte Anzahl von Lizenzen zu erwerben.

Aus all diesen Gründen wird es für einen Nutzer besonders schwierig, seine Lizenzierungs/Lizenzierungsstruktur zu verstehen und nachzuvollziehen. Dies birgt das Risiko von Fehlern bei der Lizenzierung, die zu unnötigen Kosten (z. B. durch unnötige Lizenzierung) oder zu rechtlichen Risiken führen können, wenn die Lizenzierungsarchitektur falsch aufgebaut wird.

Daher besteht für einen Nutzer (einen OEM - Original Equipment Manufacturer - oder einen Endnutzer) ein Bedarf an einer Lösung, die es ihm ermöglicht, einem neuen Produkt, das mehrere Softwarelösungen und/oder Softwaremodule umfasst, auf einfache und harmonisierte Weise Lizenzen und Unterlizenzen hinzuzufügen, die Bedingungen für jede einzelne Lizenz hinzufügen, insbesondere wenn es Konflikte gibt.

Bisher bestand die Hauptlösung darin, die Lizenzierung für jedes der lizenzpflichtigen Produkte oder Module manuell vorzunehmen. Der Nutzer ist also dafür verantwortlich, die richtige Lizenz auszuwählen und eine ausreichende Anzahl von Lizenzen zu erwerben. Mit anderen Worten: Der gesamte Prozess beruht auf einem nicht automatisierten Ansatz, bei dem eine Arbeitskraft eingesetzt wird, die geschult und kompetent sein muss. Diese Lösung erfordert, wie oben dargelegt, den Einsatz einer großen Anzahl geschulter Arbeitskräfte und ist gleichzeitig anfällig für viele Fehler, die zu rechtlichen Risiken oder Kosten für nicht benötigte Lizenzen führen können. Darüber hinaus bietet dieser Ansatz keine Lösung für Konflikte über Lizenzmodelle oder Lizenzbedingungen, die zwischen verschiedenen Lizenzen/Unterlizenzen bestehen können.

Eine andere Lösung sind Lizenzmanagementsysteme, die als "proprietär" bezeichnet werden, wenn sie von den Herstellern der lizenzpflichtigen Software oder Softwaremodule bereitgestellt werden, oder als "Drittanbieter", wenn sie von Drittherstellern/Verkäufern bereitgestellt werden (z. B. O-penLM). Das Ziel dieser Systeme ist es, die Lizenzierung zu vereinfachen, z. B., indem der Zugang zur Lizenzierung mehrerer Produkte, die unterschiedlichen Lizenzen und Lizenzmodellen unterliegen, in einer einzigen Schnittstelle zentralisiert wird. Dennoch bleiben auch bei dieser Lösung jede Lizenz und Unterlizenzierung unabhängig. Außerdem bleibt die Verantwortung für die Auswahl der richtigen Lizenz und die Anzahl der zu nehmenden Lizenzen beim Nutzer. Außerdem sind die verschiedenen Lizenzen, die auf diese Weise genommen werden, keineswegs harmonisiert (ihr Lizenzierungsmodell kann völlig unterschiedlich sein und ihre Bedingungen können zu Konflikten führen).

Die vorliegende Offenbarung schlägt als Lösung zur Reduzierung dieser Komplexität innerhalb eines industriellen Automatisierungsökosystems einen standardisierten Lizenzierungsmechanismus sowie eine Modellierungsmöglichkeit vor, um verschiedene Komponenten zu lizenzieren, um eine sogenannte "kombinierte Lizenz" zusammenzustellen. Diese Lösung reduziert nicht nur die Anzahl der benötigten Systeme, sondern auch die Manipulationen an einer Vielzahl von Lizenzen, die bei der Implementierung von Automatisierungslösungen in die heutigen industriellen Prozesse auftreten können.

### ZUSAMMENFASSUNG DER ERFINDUNG

Der Gegenstand der vorliegenden Erfindung ermöglicht eine Lösung in Fällen, in denen mehrere Softwareprogramme oder Softwaremodule jeweils eine Lizenz erfordern, die unterschiedlichen Lizenzierungsregeln unterliegen kann.

Die in dieser Offenlegung vorgeschlagene kombinierte Lizenz kann implementiert werden, indem sie automatisch von einem Lizenzserver aus generiert wird. Dieser Server kann die notwendigen Elemente aller Lizenzen und Unterlizenzen der von einem oder mehreren Anbietern angebotenen Software und Softwaremodule zusammenstellen, so dass der Nutzer die für seine technische Lösung erforderliche Software und Softwaremodule auswählen kann, während er gleichzeitig das optimale Geschäfts-/Lizenzierungsmodell für seinen Bedarf wählen kann.

So kann das Gültigkeitskontrollsystem einer Maschine, eines Maschinenparks, einer Produktionsstätte oder eines Unternehmens diese kombinierte Lizenz interpretieren und jede lizenzpflichtige Komponente, die in dieser kombinierten Lizenz vorhanden ist, kann die notwendigen Informationen über ihre Lizenz bereitstellen, damit die Software und die Softwaremodule dort, wo sie benötigt werden, aus dieser einen kombinierten Lizenz implementiert werden können.

Durch diesen Ansatz muss der Nutzer nur eine einzige Lizenz erstellen, anstatt eine Vielzahl verschiedener Lizenzen mit unterschiedlichen Laufzeiten, Lizenzierungsmodellen usw. verwalten zu müssen. Außerdem muss sich der Nutzer nicht selbst um die Interdependenzen zwischen den verschiedenen Lizenzen und Unterlizenzen kümmern. Denn die Lösung basiert auf einer einzigen kombinierten Lizenz, und die Bestimmung der Abhängigkeiten zwischen den Lizenzen und Unterlizenzen wird vom System selbst implementiert. Dadurch werden Kombinationsfehler direkt bei der Erstellung der Lizenz vermieden. Darüber hinaus vermeidet die kombinierte Lizenz sowohl das rechtliche Risiko einer fehlerhaften Lizenzierung als auch unnötige Kosten für zusätzliche Lizenzen, wenn der Nutzer diese Lizenz nicht wirklich benötigt oder wenn der Nutzer nicht weiß, dass er bereits über eine Lizenz für diese Software oder dieses Softwaremodul verfügt.

Die vorliegende Erfindung stellt ein Verfahren, ein System, einen Server, ein Computerprogramm und ein Aufzeichnungsmedium für computerlesbare Daten vor, das die Erstellung und Verwendung einer kombinierten Lizenz für eine oder mehrere Softwareprodukte mit einem oder mehreren lizenzierten Softwaremodulen implementiert.

Ein erster Aspekt der vorliegenden Erfindung besteht in einem Verfahren zur Erstellung und Verwendung einer kombinierten Lizenz für eine oder mehrere Softwareprodukte, die ein oder mehrere lizenzpflichtige Softwaremodule umfasst.

Ein zweiter Aspekt der vorliegenden Erfindung besteht aus einem Server, der so konfiguriert ist, dass er eine kombinierte Lizenz für eine oder mehrere Softwareprodukte erstellt und verwendet, die ein oder mehrere lizenzpflichtige Softwaremodule enthält.

Ein dritter Aspekt der vorliegenden Erfindung besteht aus einem System, das den Server gemäß dem zweiten Aspekt der vorliegenden Erfindung umfasst.

Ein vierter Aspekt der vorliegenden Erfindung besteht aus einem Computerprogramm mit Anweisungen, die, wenn das Programm von einem Computer ausgeführt wird, diesen dazu veranlassen, die Schritte des Verfahrens gemäß dem ersten Aspekt der vorliegenden Erfindung auszuführen.

Ein fünfter Aspekt der vorliegenden Erfindung besteht aus einem computerlesbaren Aufzeichnungsmedium, das Anweisungen für die Erstellung von kombinierten Lizenzen für lizenzpflichtige Software und Softwarekomponenten enthält, die, wenn sie von einem Computer ausgeführt werden, diesen dazu veranlassen, die Schritte des Verfahrens gemäß dem ersten Aspekt der vorliegenden Erfindung auszuführen.

Vorteilhafte Gestaltungen und Weiterentwicklungen ergeben sich aus den anderen abhängigen Ansprüchen und aus der Beschreibung unter Bezugnahme auf die Figuren der Zeichnungen.

Gegebenenfalls können die oben genannten Konfigurationen und Entwicklungen auf beliebige Weise kombiniert werden. Andere mögliche Konfigurationen, Entwicklungen und Implementierungen der Offenbarung umfassen auch nicht ausdrücklich erwähnte Kombinationen von Merkmalen der Offenbarung, die zuvor beschrieben wurden oder die im Folgenden mit Bezug auf die Ausführungen beschrieben werden. Insbesondere wird ein Fachmann in diesem Fall auch einzelne Aspekte als Verbesserungen oder Ergänzungen zur Grundform der vorliegenden Offenbarung hinzufügen.

### INHALTSANGABE DER ZEICHNUNG

Die vorliegende Offenbarung wird im Folgenden anhand der in den schematischen Figuren der Zeichnungen dargestellten Ausführungsformen näher beschrieben, in denen:
- Fig. 1: Fig. 1 eine abstrakte Darstellung des Konzepts einer kombinierten Lizenz nach der vorliegenden Erfindung ist;
- Fig. 2: Fig. 2 eine abstrakte Darstellung eines Systems ist, das die Erstellung und Nutzung einer kombinierten Lizenz gemäß einer Umsetzung der vorliegenden Erfindung ermöglicht;
- Fig. 3: Fig. 3 eine abstrakte Darstellung eines Systems ist, das die Erstellung und Nutzung einer kombinierten Lizenz gemäß einer weiteren Umsetzung der vorliegenden Erfindung ermöglicht; und
- Fig. 4: Fig. 4 eine Darstellung der Schritte eines computerimplementierten Verfahrens ist, das die Erstellung und Nutzung einer kombinierten Lizenz gemäß der vorliegenden Erfindung ermöglicht.

Die beigefügten Zeichnungen sollen ein besseres Verständnis der Ausführungsformen der Offenbarung vermitteln. Sie veranschaulichen Ausführungsformen und helfen in Verbindung mit der Beschreibung, die Grundsätze und Konzepte der Offenbarung zu erläutern. Weitere Ausführungsformen und viele der erwähnten Vorteile werden beim Betrachten der Zeichnungen deutlich.

In den Zeichnungen werden ähnliche, funktional gleichwertige und gleich funktionierende Elemente, Merkmale und Komponenten in jedem Fall mit ähnlichen Bezugszeichen versehen, sofern nichts Anderes angegeben ist.

### BESCHREIBUNG DER AUSFÜHRUNGSFORMEN

Im Folgenden werden die Ausführungsformen nun unter Bezugnahme auf die beigefügten Zeichnungen ausführlich beschrieben. Die Offenbarung kann jedoch nicht auf die Umsetzung beschränkt werden, in der die Idee der Offenbarung präsentiert wird. Eine andere Umsetzung, die im Bereich der Idee einer anderen früheren Offenbarung enthalten ist, oder die frühere Offenbarung können leicht durch Hinzufügen, Ändern, Entfernen und dergleichen eines anderen Elements vorgeschlagen werden.

Die in dieser Spezifikation verwendeten Begriffe wurden so gewählt, dass sie gängige und weit verbreitete allgemeine Begriffe umfassen. In einigen Fällen kann ein Begriff ein Begriff sein, der vom Antragsteller willkürlich festgelegt wurde. In solchen Fällen wird die Bedeutung des Begriffs in dem entsprechenden Teil der detaillierten Beschreibung definiert. So sollten die in der Spezifikation verwendeten Begriffe nicht einfach durch den Namen der Begriffe definiert werden, sondern auf der Grundlage der Bedeutung der Begriffe sowie der allgemeinen Beschreibung dieser Offenbarung.

Im Folgenden werden Ausführungsformen der vorliegenden Offenbarung unter Bezugnahme auf die begleitenden Zeichnungen ausführlich beschrieben. Es sei darauf hingewiesen, dass in den Zeichnungen dieselben Bezugsziffern verwendet werden, um identische oder ähnliche Elemente zu bezeichnen.

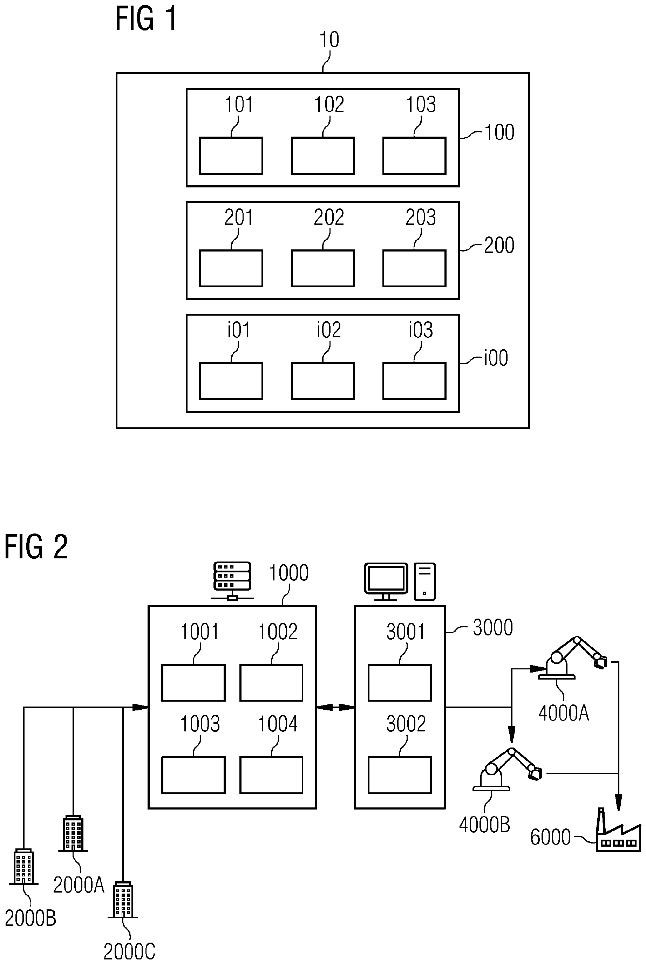

In Fig. 1 ist das Konzept einer kombinierten Lizenz gemäß der vorliegenden Erfindung abstrakt dargestellt, um dem Fachmann den Umfang der Lizenz verständlich zu machen. Im Allgemeinen kann eine Lizenz durch einen Lizenzmodus, einen oder mehrere Lizenzparameter sowie Bedingungen und Konditionen ("terms and conditions") definiert werden.

Die Lizenzierungsart oder das Geschäftsmodell besteht in der Art und Weise, wie die Software oder das Modul einer Software einem Kunden gegen Zahlung einer Gebühr zur Verfügung gestellt wird. Die einfachste Lizenzierungsart ist daher das Abonnement, bei dem ein Zugang für eine bestimmte Dauer gegen eine bestimmte Gebühr erworben wird. Es gibt aber auch andere Ansätze, wie z. B. den Ansatz, bei dem für jede Nutzung bezahlt wird. In diesem Fall wird jedes Mal, wenn die Software genutzt wird, eine Zahlung fällig. Der SaaS-Ansatz ist eine Art der Lizenzierung, bei der die Software als Dienstleistung angeboten wird. Es ist ein kommerzielles Betriebsmodell, bei dem die Software auf einem entfernten Server statt auf dem Rechner des Nutzers installiert wird. Die Kunden können so z. B. über ein Abonnement freien Zugang zum Online-Dienst erhalten.

In jedem der Lizenzmodi können ein oder mehrere Lizenzparameter verwendet werden. Beispielsweise kann im Fall eines Abonnements ein Lizenzparameter seine Dauer oder sein Start- und Enddatum sein. In ähnlicher Weise kann bei einem Lizenzierungsmodus, der auf einer Zahlung für die Nutzung basiert, ein Lizenzparameter die Anzahl der Nutzungen und/oder deren Dauer sein. Ein Lizenzparameter, der für mehrere Arten von Lizenzierungsmodi gilt, könnte auch die Anzahl der zulässigen Nutzer sein. Schließlich sind die Bedingungen die vertraglichen und rechtlichen Bedingungen, die mit der erteilten Lizenz verbunden sind. In der Computerumgebung, in der die vorliegende Erfindung umgesetzt wird, umfasst eine Lizenz unter anderem einen Lizenzmodus, einen oder mehrere Lizenzparameter sowie Bedingungen und Konditionen.

Wie oben dargestellt, beruht die vorliegende Erfindung auf der Schaffung und Verwendung einer sogenannten kombinierten Lizenz, die es ermöglicht, in einer einzigen Lizenz mehrere Lizenzen und/oder Unterlizenzen zu kombinieren, die einer oder mehreren Softwareprogrammen und/oder einem oder mehreren Softwaremodulen entsprechen.

Fig. 1 zeigt eine Möglichkeit, die Idee der kombinierten Lizenz konzeptionell anzugehen, indem sie nach den Komponenten dargestellt wird, die sie in Form von Modulen integriert. Der Fachmann versteht natürlich, dass es sich hierbei um eine konzeptionelle Möglichkeit handelt, die kombinierte Lizenz darzustellen und sie in Form von Daten in einem automatischen Datenverarbeitungssystem zu implementieren. Andere Konstruktionen/Architekturen, die die Kombination mehrerer Lizenzen und Unterlizenzen ermöglichen, können vom Fachmann implementiert werden, solange sie zu einer kombinierten Lizenz führen, deren Lizenzmodus und Lizenzparameter harmonisiert sind.

In unserer Illustration kann die kombinierte Lizenz 10 ein oder mehrere Softwarelizenzmodule 100, 200, bis zu i00 umfassen, wobei i eine ganze Zahl gleich oder größer als 1 ist. Jedes Softwarelizenzmodul wird beispielsweise der Lizenz für eine Software entsprechen. Selbstverständlich kann eine Softwarelizenz auch eine zusammengesetzte Lizenz sein und somit ein Satz von Lizenzen für mehrere Softwareprodukte. Beispielsweise kann ein Anbieter eine einzige Lizenz für alle seine Softwareprodukte anbieten.

In jedem der Softwarelizenzmodule können Untermodule zur Unterlizenzierung von Softwarekomponenten vorhanden sein. Beispielsweise kann das Softwarelizenzmodul 100 drei Unterlizenzierungsmodule für Softwarekomponenten 101, 102, 103 enthalten. In ähnlicher Weise können auch die Softwarelizenzmodule 200 und 100, ihrerseits drei Softwarekomponenten-Unterlizenzmodule 201, 202, 203 bzw. i01, 102, 103 enthalten.

Jedes dieser Module und Submodule wird die notwendigen Informationen speichern, die es dem Gültigkeitskontrollsystem eines Computers, einer Maschine, einer Gruppe von Maschinen, einer Produktionsstätte oder eines Unternehmens ermöglichen, festzustellen, ob es eine wirksame Lizenz für die Software oder Softwarekomponente gibt, die rechtmäßig verwendet werden kann, um den Zugriff auf diese Software oder Softwarekomponente zu entsperren.

Im Gegensatz zu den im Stand der Technik existierenden Lösungen hat die kombinierte Lizenz den Vorteil, dass sie eine Lizenz für jede Software und Softwarekomponente, für die die kombinierte Lizenz erstellt wurde, mit einem Lizenzmodus, Lizenzparametern und Bedingungen bereitstellt, die zum Zeitpunkt der Erstellung der kombinierten Lizenz harmonisiert wurden. Dadurch werden Konflikte zwischen den Lizenzmodi, den Lizenzparametern und den Bedingungen der verschiedenen Lizenzen und Unterlizenzen bereits bei der Erstellung der kombinierten Lizenz vermieden. Darüber hinaus muss sich der Nutzer nicht um die Architektur der verschiedenen erforderlichen Lizenzen kümmern, da die kombinierte Lizenz die erforderliche Lizenzierungsstruktur für die lizenzierte Software und die lizenzierten Softwaremodule bereits bei der Erzeugung der kombinierten Lizenz selbst erzeugt. Die Komplexität, die mit der Abhängigkeit und Interdependenz von Lizenz und Unterlizenzierung verbunden ist, wird somit aus dem Verantwortungsbereich des Nutzers entfernt.

Die kombinierte Lizenz kann die Form von Daten in einer Datenbank auf einem Server oder einem anderen Speicherelement annehmen, vorausgesetzt, sie kann gespeichert werden und ist für andere Elemente eines Computersystems zugänglich, das die Erstellung und Nutzung dieser kombinierten Lizenzen ermöglicht.

Fig. 2 zeigt eine abstrakte Darstellung eines Systems, das die Erstellung und Nutzung einer kombinierten Lizenz gemäß einer Umsetzung der vorliegenden Erfindung ermöglicht.

Das Kernstück dieses Beispiels beruht auf einem Server 1000 zur Erstellung von kombinierten Lizenzen. In dem in Fig. 2 gezeigten Beispiel handelt es sich um einen einzelnen Server, aber es ist durchaus denkbar, dass ein verteiltes System diesen Server ersetzt oder dass dieser Server durch jede Art von Computer ersetzt wird, solange er die unten beschriebenen Funktionen bereitstellt.

In unserem Beispiel können Verkäufer 2000A, 2000B und 2000C von Software oder Softwaremodulen auf den Server 1000 zugreifen, um Lizenzen und/oder Unterlizenzen für ihre Software und/oder Softwarekomponenten zur Verfügung zu stellen. Auf diese Weise kann der Server 1000 als Marktplatz fungieren, auf dem Lizenzen und/oder Unterlizenzen für verschiedene Software und/oder Softwarekomponenten zum Verkauf angeboten werden, mit einer oder mehreren Optionen bezüglich der Lizenzierungsmodi, der entsprechenden Lizenzparameter und der Lizenzbedingungen. In einer bevorzugten Umsetzung der vorliegenden Erfindung werden die Verkäufer von Software und Softwarekomponenten für ihre Software und/oder Softwarekomponenten mehrere Lizenzmodi und einen oder mehrere entsprechende Lizenzparameter für jeden dieser Lizenzmodi anbieten. Ein möglicher Ansatz besteht darin, dass den Verkäufern eine Liste von Lizenzmodi und jeweils eine Liste von einem oder mehreren entsprechenden Lizenzparametern sowie die entsprechenden Bedingungen zur Verfügung gestellt werden, damit sie bei der Bereitstellung ihrer Angebote eine Auswahl treffen können. Zu diesem Zweck verfügt der Server 1000 über ein Kommunikationsmodul 1001, das es ihm ermöglicht, mit den anderen Elementen des computergestützten Systems zu kommunizieren. Das Kommunikationsmodul 1001 kann mit ähnlichen Kommunikationsmodulen bei den Verkäufern in Verbindung gebracht werden, so dass diese auf die Daten des Servers 1000 zugreifen und ihre eigenen Daten an den Server 1000 senden können.

Der Server 1000 verfügt über ein Bibliotheksmodul 1002. Diese Bibliothek ist eine Datenbank, die eine Liste verfügbarer Lizenzmodi und Lizenzparameter enthalten kann, die den verfügbaren Lizenzmodi entsprechen. Das Bibliotheksmodul 1002 kann auch eine Liste der verfügbaren und der Lizenzmodi und - parametern entsprechenden Bedingungen und Konditionen enthalten. Der Inhalt des Bibliotheksmoduls 1002 kann von den Verkäufern erstellt werden oder, in einer vorteilhaften Implementierung, von einem Verwalter, der für die Einrichtung und Verwaltung des Marktplatzes, der dem Server 1000 entspricht, verantwortlich ist und gemäß den Regeln definiert wird, die dieser Verwalter dem Marktplatz auferlegen will.

Der Server 1000 verfügt auch über ein Modul 1003 zum Erstellen einer Lizenz für eine Software oder eine Softwarekomponente. So kann ein Lizenzverkäufer eine Lizenz und/oder eine Unterlizenz für eine Software und/oder eine Softwarekomponente anbieten, indem er auf das Modul 1003 zur Lizenzerstellung zugreift. Da dieses Modul mit dem Bibliotheksmodul 1002 verbunden ist, kann der Verkäufer für jede angebotene Lizenz einen oder mehrere Lizenzierungsmodi aus einer Liste auswählen. Für jeden ausgewählten Lizenzmodus müssen die entsprechenden Lizenzparameter, die aus der Liste in der Bibliothek stammen, vom Verkäufer eingegeben werden, damit er die Höhe der Lizenzgebühr bestimmen kann, wenn die zu erstellende Lizenz als Teil einer kombinierten Lizenz ausgewählt wird. Es sei darauf hingewiesen, dass der Verkäufer in einer bevorzugten Ausführungsform alle Lizenzmodi und alle entsprechenden Parameter ausfüllen wird, um möglichst viele Optionen für die Kombination von Lizenzen und Unterlizenzen zu bieten, wenn eine harmonisierte kombinierte Lizenz erstellt wird, d. h. eine kombinierte Lizenz, deren Lizenzmodus, Lizenzparameter und Bedingungen harmonisiert sind.

Der Server 1000 verfügt schließlich über ein Modul 1004 zur Erstellung von kombinierten Lizenzen. Dieses Modul ermöglicht es einem Nutzer 3000, auf die Liste der Lizenzen und Unterlizenzen zuzugreifen, die auf dem vom Server 1000 implementierten Marktplatz zum Verkauf angeboten werden. Auf diese Weise kann ein Nutzer 3000 die von ihm benötigte(n) Software(s) und/oder Softwarekomponente(n) auswählen und diese in einer kombinierten Lizenz zusammenfassen. In einer bevorzugten Implementierung wurden alle aufgelisteten Lizenzmodi von den Verkäufern ausgefüllt, sodass der Nutzer 3000 selbst den Lizenzmodus sowie den gewünschten Nutzungsumfang (d. h. den Wert, der auf den Multiplikator des Lizenzparameters gesetzt werden soll, um den Wert der Lizenzgebühr festzulegen) auswählen kann. Auf diese Weise verfügt die resultierende kombinierte Lizenz über einen harmonisierten Lizenzmodus und harmonisierte Lizenzparameter für alle Lizenzen und/oder Unterlizenzen, die kombiniert wurden. Es sind auch andere Ansätze zur Harmonisierung denkbar, z. B. könnte der Nutzer die Software und Softwarekomponenten auswählen, die er benötigt, und festlegen, ob er sie in einer oder mehreren kombinierten Lizenzen erhalten kann. Beispielsweise könnte eine kombinierte Lizenz für Software und Softwarekomponenten angeboten werden, für die die Anbieter kompatible Lizenzierungsmodi festgelegt haben. Wenn der Nutzer beispielsweise zehn Softwareprodukte und -komponenten ausgewählt hat, kann das Modul 1004 zur Erstellung einer kombinierten Lizenz einen Lizenzmodus bestimmen, der von den meisten zu kombinierenden Lizenzen geteilt wird, und dem Nutzer eine entsprechende kombinierte Lizenz anbieten. Wenn beispielsweise sieben der zehn gewünschten Lizenzen durch ein Abonnement erworben werden können, wird das Modul 1003 zur Erstellung kombinierter Lizenzen eine kombinierte Abonnementlizenz für diese sieben Softwares oder Softwarekomponenten anbieten. Idealerweise schlägt das Modul 1004 zur Erstellung einer kombinierten Lizenz zuerst eine kombinierte Lizenz vor, die die größte Anzahl von Lizenzen und/oder Unterlizenzen umfasst. Anschließend wird mit den restlichen gewünschten Lizenzen auf die gleiche Weise verfahren, wobei vorzugsweise in jedem Schritt versucht wird, sie nach Lizenzmodus zu gruppieren, um eine kombinierte Lizenz mit möglichst vielen Lizenzen zu erhalten, die denselben Lizenzmodus teilen. Dieser Ansatz ist jedoch weniger attraktiv als der, bei dem die Verkäufer gezwungen sind, Lizenzmodi für jeden der auf dem Marktplatz angebotenen Lizenzmodi anzugeben. In diesem Fall kann nämlich immer eine kombinierte Lizenz für alle Software und Softwarekomponenten erworben werden. Dies ist nicht der Fall, wenn bestimmte Lizenzen nur in bestimmten Lizenzmodi angeboten werden. In diesem Fall kann der Nutzer nur mehrere Lizenzen erhalten, darunter eine oder mehrere kombinierte Lizenzen. Die kombinierte(n) Lizenz(en) wird/werden dennoch eine wesentliche Verringerung der Komplexität der Lizenzierung ermöglichen, indem die größtmögliche Anzahl möglicher Lizenzen pro kombinierter Lizenz harmonisiert und zentralisiert wird. Die erhaltene(n) kombinierte(n) Lizenz(en) entspricht/entsprechen dem konzeptuellen Modell oder dem Datenmodell wie in Fig. 1 dargestellt, d. h. sie enthält/enthalten die Informationen das eine der in der kombinierten Lizenz enthaltenen Lizenzen, die das Gültigkeitskontrollsystem des Elements benötigt, , um festzustellen, ob es berechtigt ist, die Software oder die Softwarekomponente zu nutzen oder nicht.

Der Nutzer 3000 kann ein Computer (in jeder Form, wie z. B. eine Workstation, ein PC, ein Tablet oder sogar ein Smartphone) sein, den ein Benutzer als natürliche Person verwendet, um auf den Server 1000 zur Erstellung kombinierter Lizenzen zuzugreifen. Es ist auch möglich, dass der Nutzer 3000 ein Computer ist, der autonom/automatisch arbeitet, wenn es um die Erstellung der Lizenz geht. Wenn nämlich in dem Fall, dass ein Werkzeug zu einer Maschine hinzugefügt werden soll, ein natürlicher Benutzer die Installation dieses Werkzeugs auf einer Maschine festlegt, kann die Maschine so konfiguriert werden, dass sie selbstständig die Software und die Softwaremodule bestimmt, die für die Implementierung dieses Werkzeugs erforderlich sind. Die Maschine kann dann selbstständig die entsprechenden Lizenzen und Unterlizenzen bestimmen und so konfiguriert werden, dass sie automatisch die kombinierte Lizenz in denselben Schritten erstellt, die erforderlich sind, wenn der Benutzer eine natürliche Person ist.

Der Nutzer 3000 kann ein Kommunikationsmodul 3001 umfassen, das dem Kommunikationsmodul 1001 des Servers 1000 entspricht.

Der Nutzer 3000 kann auch ein Benutzerschnittstellenmodul 3002 enthalten, das dem Benutzer eine Schnittstelle zur Verfügung stellt, die es ihm ermöglicht, mit dem computerisierten System zu interagieren. Dabei kann es sich beispielsweise um eine grafische Benutzeroberfläche handeln, die die verfügbare Software auflistet, die auf dem vom Server 1000 implementierten Marktplatz zum Verkauf angeboten wird. Durch Interaktion mit der Schnittstelle des Benutzerschnittstellenmoduls 3002 kann der Benutzer als natürliche Person - beispielsweise durch Navigation in der Schnittstelle - aus einer Liste von angebotenen Lizenzen auswählen, wobei die Liste vom Server 1000 abgerufen wurde. In einer bevorzugten Ausführungsform kann der Benutzer nach der Auswahl der Software und der Softwarekomponenten einen Lizenzmodus aus den aufgelisteten Lizenzmodi auswählen, die der Liste der auf dem Server 1000 vorhandenen Bibliothek entsprechen. Wenn Sie beispielsweise alle Software und Softwarekomponenten ausgewählt haben, können Sie als natürliche Person ein Abonnement als Lizenzmodus und eine Anzahl von Benutzern/Empfängern als Lizenzparameter festlegen. In dem Beispiel in Fig. 2 ist der Benutzer als natürliche Person ein Mitarbeiter des Unternehmens oder der Produktionsstätte 6000. Der Benutzer als natürliche Person definiert also für jede dieser CNC-Maschinen (die Benutzer/Empfänger) die Software und Softwarekomponenten, die diese Maschinen benötigen, um im industriellen Prozess des Unternehmens oder der Produktionsstätte 6000 eingesetzt zu werden.

Die so erstellte kombinierte Lizenz kann an die CNC-Maschinen oder an das Unternehmen oder die Produktionsstätte 6000 gesendet werden, je nachdem, wo die Überprüfung der Zugriffsrechte auf die Software und Softwarekomponenten durchgeführt wird.

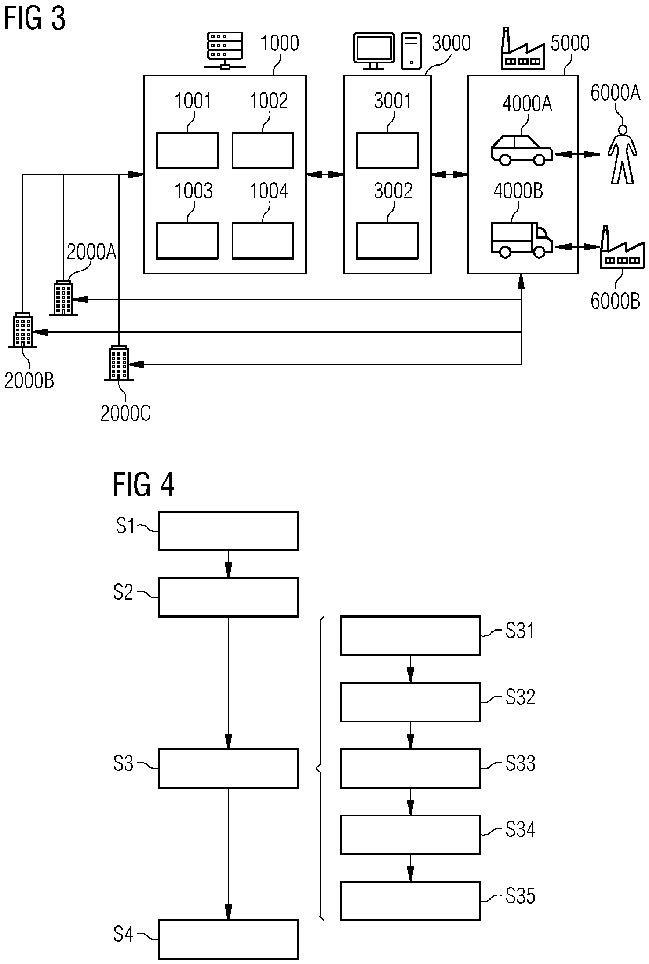

In ähnlicher Weise zeigt Fig. 3 ein etwas anderes Beispiel, bei dem der Benutzer als natürliche Person dem Unternehmen oder der Produktionsstätte 5000 angehört. Dieses Unternehmen oder diese Produktionsstätte hat zum Ziel, z. B. die autonomen Fahrzeuge 4000A und 4000B an einen Endbenutzer als natürliche Person 6000A oder an ein anderes Unternehmen oder eine andere Produktionsstätte 6000B zu liefern. In diesem Fall ist es der Nutzer als natürliche Person des Unternehmens oder der Produktionsstätte 5000, der für jedes produzierte autonome Fahrzeug eine kombinierte Lizenz festlegt, die der Software und den Softwarekomponenten entspricht, die dem Nutzer der produzierten autonomen Fahrzeuge zur Verfügung gestellt werden müssen. In diesem letzten Beispiel kann der Endnutzer somit von allen Verantwortlichkeiten/Arbeitsaufwand entlastet werden, die mit der Beschaffung der notwendigen Lizenzen für das autonome Fahrzeug verbunden sind, das er vom Unternehmen 5000 erwirbt.

So können in den beiden in Fig. 2 und Fig. 3 dargestellten Fällen die Gültigkeitskontrollsysteme, die beispielsweise im Fall von Fig. 2 innerhalb des Unternehmens oder der Produktionsstätte 6000 oder im Fall von Fig. 3 beispielsweise innerhalb der autonomen Fahrzeuge 4000A und 4000B platziert sind, in der kombinierten Lizenz die Elemente erhalten, die es ihnen ermöglichen, die Gültigkeit jeder der Lizenzen oder Unterlizenzen zu bestimmen, die jeder der Software und/oder Softwarekomponenten entsprechen, die auf den CNC-Maschinen oder in den autonomen Fahrzeugen verwendet werden sollen.

Es ist anzumerken, dass in der Umsetzung wie in Fig. 3 dargestellt, bei der Auslieferung der autonomen Fahrzeuge an ihre Endnutzer, die autonomen Fahrzeuge über alle Hardware, Software, Konfiguration und Lizenzen verfügen, die für ihren Betrieb notwendig sind.

Es ist anzumerken, dass dieses Beispiel eine Situation illustriert, in der das autonome Fahrzeug mit der Software und den Softwaremodulen ausgestattet ist und die notwendigen Lizenzen für deren Betrieb auf einem Computer des autonomen Fahrzeugs vor der Auslieferung hat. Die vorliegende Erfindung ist jedoch nicht auf diesen Fall beschränkt. Es ist möglich, dass das Fahrzeug an seinen Endbenutzer ohne Software und/oder ohne dass eine kombinierte Lizenz erzeugt wurde, ausgeliefert wird. Darüber hinaus können in einigen Implementierungen die Software und die Softwaremodule in einer Cloud bereitgestellt werden, anstatt im Fahrzeug installiert zu werden, sei es in einem frühen Stadium vor der Auslieferung oder in einem späteren Stadium. Die Installation kann auch hybrid sein, mit Elementen in der Cloud und Elementen, die im autonomen Fahrzeug installiert sind.

Fig. 4 zeigt Schritte eines computerimplementierten Verfahrens, das die Erstellung und Nutzung einer kombinierten Lizenz gemäß der vorliegenden Erfindung ermöglicht. Diese verschiedenen Schritte können sich auf die Erstellung von Inhalten beziehen, die für den vom Server 1000 implementierten Marktplatz erforderlich sind. Diese Schritte zur Erstellung des Inhalts, wie sie beschrieben werden, sind für die Umsetzung der vorliegenden Erfindung nicht wesentlich. Die Erfindung erfordert das Vorhandensein des Inhalts der Bibliotheken des Bibliotheksmoduls 1002 und der Angebote, die von den Verkäufern unter Verwendung des Moduls 1004 erstellt wurden, aber die Art und Weise, wie dieser Inhalt dem Server zur Verfügung gestellt wurde, ist für die Umsetzung der vorliegenden Erfindung nicht wesentlich.

In Schritt S1 wird ein Verwalter des vom Server 1000 implementierten Marktplatzes die verschiedenen Elemente ausfüllen, die für das Bibliotheksmodul 1002 erforderlich sind. Dieser Schritt kann nach dem oben in Fig. 2 dargestellten Ansatz durchgeführt werden. Beispielsweise kann der vom Server 1000 implementierte Marktplatzmanager eine Liste von Lizenzmodi und eine Liste von entsprechenden Lizenzparametern sowie eine Liste von Bedingungen definieren. Der Inhalt dieser Listen kann so generisch wie möglich definiert werden, damit sie von mehreren Verkäufern, die ein Angebot auf dem Marktplatz erstellen wollen, verwendet werden können.

In Schritt S2 wird ein Verkäufer ein Lizenzangebot erstellen, das er auf dem vom Server 1000 implementierten Marktplatz anbieten möchte. Dieser Schritt kann nach dem oben in den Fig. 2 und 3 dargestellten Ansatz durchgeführt werden. Der Verkäufer, der ein Angebot erstellt, definiert die betreffende Software oder Softwarekomponente, wählt einen oder mehrere Lizenzierungsmodi aus, beispielsweise aus den in der Liste im Bibliotheksmodul angebotenen. Lizenzparameter, die dem ausgewählten Lizenzmodus entsprechen, müssen vom Verkäufer ausgefüllt werden. Wenn der Lizenzmodus beispielsweise ein Abonnement ist, kann der Lizenzparameter eine Laufzeit oder ein Start- und Enddatum der Lizenz sein. Der Verkäufer muss hier z. B. eine Laufzeit oder eine Formel für die Berechnung der Lizenzgebühr nach der gewählten Laufzeit bei der Lizenzierung festlegen.

Es sei darauf hingewiesen, dass in diesem Schritt und auch bei der vorherigen Diskussion des Inhalts von Fig. 2 dargestellt wurde, dass die Erstellung des Inhalts der im Bibliotheksmodul des Servers gespeicherten Listen vorzugsweise vom Marktplatzbetreiber vorgenommen wurde, um die Harmonisierung der verschiedenen Lizenzmodi und der entsprechenden Parameter zu erleichtern. Dennoch ist bei einer Umsetzung der vorliegenden Erfindung der Inhalt der Listen nicht starr und ein Verkäufer, der ein Lizenzangebot erstellt, kann einen Lizenzmodus erstellen, der der allgemeinen, in der Bibliothek enthaltenen Liste hinzugefügt werden soll. Dieser Ansatz hat den Vorteil, dass der Verkäufer eine größere Flexibilität bei den Lizenzmodi hat, die er anbieten möchte. Der Nachteil ist, dass die für die Erstellung von kombinierten Lizenzen erforderliche Harmonisierung erschwert wird, da es weniger wahrscheinlich ist, dass die Erstellung einer einzigen kombinierten Lizenz für alle von einem Nutzer gewünschten Software und Softwarekomponenten bei der Erstellung einer kombinierten Lizenz zu einer einzigen kombinierten Lizenz für alle gewünschten Software und Softwarekomponenten führt.

In Schritt S3 wird ein Nutzer 3000 die Erstellung einer kombinierten Lizenz vornehmen. Dieser Schritt kann nach dem oben als Kommentar zu Fig. 2 dargestellten Ansatz durchgeführt werden.

Schritt S3 kann außerdem die Unterschritte S31 bis S35 umfassen.

Schritt S31: Initiieren der Erstellung einer kombinierten Lizenz 10 durch den Nutzer 3000 auf dem Server 1000, der für die Erstellung von kombinierten Lizenzen für lizenzpflichtige Software und Softwarekomponenten konfiguriert ist.

Schritt S32: Auswählen, durch den Nutzer 3000, einer Vielzahl von Softwareelementen aus einer Liste von Softwareelementen, die aus einer auf dem Server 1000 vorhandenen Liste auswählbar sind, wobei ein Softwareelement eine Software 100, 200, i00 oder eine lizenzierte Softwarekomponente 101, 102, 103, 201, 202, 203, i01, 102, 103 ist, wobei eine Lizenz einen Lizenzmodus und einen oder mehrere entsprechende Lizenzparameter umfasst.

Schritt S33: Auswahl eines Lizenzmodus durch Nutzer 3000 aus dem/den Lizenzmodus/-modi, der/die den ausgewählten Softwareelementen entspricht/entsprechen.

Schritt S34: Eingabe, durch Nutzer 3000, eines Wertes für einen Lizenzparameter, der dem ausgewählten Lizenzmodus entspricht.

Schritt S35: Erzeugen einer kombinierten Lizenz 10 durch den Server 1000, die Lizenzinformationen, die den Lizenzen der ausgewählten Softwareelemente entsprechen, einen ausgewählten Lizenzmodus und einen Lizenzparameterwert enthält.

In Schritt S4 kann die erstellte kombinierte Lizenz vom Nutzer 3000 abgerufen und an das Systemelement, das diese Software oder Softwarekomponente benötigt, und/oder an das Systemelement, in dem die Überprüfung des Nutzungsrechts der Software oder Softwarekomponente, für die die kombinierte Lizenz erstellt wurde, durchgeführt wird, übermittelt/gesendet werden, wobei der in den Fig. 2 und 3 dargestellte Ansatz je nach Ort, an dem diese Überprüfung durchgeführt wird, angewendet wird.

Die Methode kann darüber hinaus jede andere Aktion oder jeden anderen Schritt umfassen, der in den Fig. 1 bis 3 dargestellt ist.

In den zuvor diskutierten Ausführungen wurde dargestellt, dass eine Maschine mit den Elementen einer kombinierten Lizenz und entsprechender Software und Softwaremodulen geliefert wird. Der Fachmann wird natürlich verstehen, dass diese Situation zur Erläuterung der vorliegenden Erfindung verwendet wurde, dass die Erfindung jedoch nicht auf diesen Anwendungsfall beschränkt ist.

Beispielsweise kann eine Maschine ohne eine mitgelieferte Lizenz geliefert worden sein und es kann erforderlich sein, eine Lizenz zu erstellen und die entsprechende Software und Softwaremodule zu installieren, obwohl die Maschine bereits an den OEM geliefert worden ist. Ebenso kann eine Maschine, die bereits eine kombinierte Lizenz für Software und Softwaremodule hat, mit neuer Software und Softwaremodulen ausgestattet werden, die die Erstellung einer neuen kombinierten Lizenz erfordern.

In diesen beiden Fällen kann die Installation der Komponenten und die Erstellung der kombinierten Lizenz nacheinander erfolgen und die Erstellung der kombinierten Lizenz kann zu diesem Zeitpunkt erfolgen.

Bei der Umsetzung dieses Ansatzes kann also ein Benutzer oder Administrator des Endkunden die Erstellung initiieren, je nach den Anforderungen des Rechners oder Systems, dem die Software und Softwaremodule für die neue kombinierte Lizenz zugewiesen werden sollen. Es ist auch möglich, dass der Benutzer oder Administrator des Endkunden (oder ein Computersystem, das sie wie oben beschrieben ersetzt) - je nach Bedarf an Software und Softwaremodulen - auf ein bereits existierendes kombiniertes Lizenzmodell zugreifen kann, da es bereits auf der Ebene der Maschine generiert wurde.

In jeder dieser Implementierungen, d.h. mit einer Installation der Software und einer Lizenzierung vor der Lieferung oder nach der Lieferung, wird der Fachmann verstehen, dass die Installation der Software und der Softwaremodule auf der auszustattenden Maschine oder in einer Cloud oder in einer hybriden Art und Weise teilweise in der Maschine und teilweise in einer Cloud erfolgen kann.

In einer bevorzugten Implementierung dieses Ansatzes können die zusätzlichen Lizenzen aus verfügbaren Lizenzen und Unterlizenzen (z.B. auf der Ebene der Organisation des Endkunden) angeboten und ausgewählt werden. Dies verringert die Kosten, die mit dem Vorhandensein von inaktiven oder nicht genutzten Lizenzen verbunden sind.

In einer Implementierung kann den Lizenzparametern ein spezieller Lizenzparameter, der sogenannte Reduzierungsparameter, hinzugefügt werden. In der Tat kann es für einen Herausgeber/Verkäufer von Software oder Softwaremodulen vorteilhaft sein, Preisnachlässe anzubieten, wenn mehrere Softwareprogramme oder Softwaremodule zusammen verkauft werden. In ähnlicher Weise kann der Herausgeber oder Verkäufer Rabatte für Software und Softwaremodule anbieten, die bestellt werden, während andere bereits für den Endkunden verfügbar sind. Diese Software und Softwaremodule müssen nicht notwendigerweise in irgendeiner Weise technisch miteinander verbunden sein. Der Reduktionsparameter kann ein Multiplikator mit einer Zahl zwischen 0 und 1 sein, der auf das berechnete Ergebnis des Preises der Lizenz oder der Unterlizenz für die Software oder das Softwaremodul angewendet wird, die in eine kombinierte Lizenz integriert werden soll. So kann ein Softwarehersteller beispielsweise einen Rabatt von 10% auf die Lizenzpreise anwenden, wenn die Software A und B gleichzeitig bestellt werden, oder einen Rabatt von 15%, wenn die Software A, B und C bestellt werden. Diese Rabattberechnung kann sich auf das Vorhandensein von angehängten Lizenzen innerhalb derselben zusammengesetzten Lizenz beziehen, wenn der Preis für eine zusammengesetzte Lizenz bei ihrer Erstellung berechnet wird. Das Lizenzerstellungssystem kann auch so konfiguriert werden, dass es feststellt, welche Lizenzen auf der Maschine, für die die kombinierte Lizenz angefordert wird, verfügbar sind oder welche Lizenzen bereits bei der Organisation des Endkunden verfügbar sind, um einen Rabattparameter und einen Wert für den Rabattparameter für jede der bestellten zusätzlichen Lizenzen zu bestimmen. Die Konfiguration der Verknüpfungen zwischen den Lizenzen und Unterlizenzen sowie die anwendbaren Rabatte und die entsprechenden Parameter können vom Softwarehersteller im Erstellungssystem festgelegt werden.

Obwohl die vorliegende Offenbarung im Vorhergehenden durch bevorzugte Ausführungsformen beschrieben wurde, ist sie nicht darauf beschränkt, sondern kann vielmehr auf vielfältige Weise modifiziert werden. Insbesondere kann die Offenbarung auf vielfältige Weise geändert oder modifiziert werden, ohne vom Kern der Offenbarung abzuweichen.

## Patentansprüche

1. Ein computerimplementiertes Verfahren zur Erstellung von kombinierten Lizenzen für lizenzpflichtige Softwares und Softwarekomponenten, wobei die Methode Folgendes umfasst:
Initiieren (S31), durch einen Nutzer (3000), der Erstellung einer kombinierten Lizenz (10) auf einem Server (1000), der für die Erstellung von kombinierten Lizenzen für lizenzpflichtige Softwares und Softwarekomponenten konfiguriert ist;
Auswählen (S32), durch den Nutzer (3000), einer Vielzahl von Softwareelementen aus einer Liste von Softwareelementen, die aus einer auf dem Server (1000) vorhandenen Liste auswählbar sind, wobei ein Softwareelement eine Software (100, 200, i00) oder eine Softwarekomponente (101, 102, 103, 201, 202, 203, i01, 102, i03) ist, die einer Lizenz unterliegt, wobei eine Lizenz einen Lizenzmodus und einen oder mehrere entsprechende Lizenzparameter umfasst;
Auswählen (S33), durch den Nutzer (3000), eines Lizenzmodus aus dem Lizenzmodus oder den Lizenzmodi, die den ausgewählten Softwareelementen entsprechen;
Eingeben (S34), durch den Nutzer (3000), eines Wertes für einen Lizenzparameter, der dem ausgewählten Lizenzmodus entspricht;
Erzeugen (S35), durch den Server (1000), einer kombinierten Lizenz (10), die Lizenzinformationen umfasst, die den Lizenzen der ausgewählten Softwareelemente entsprechen, eines ausgewählten Lizenzmodus und eines Lizenzparameterwertes.

2. Das computerimplementierte Verfahren zum Erstellen von kombinierten Lizenzen für lizenzpflichtige Software und Softwarekomponenten nach Anspruch 1, wobei der Schritt des Erzeugens (S35) einer kombinierten Lizenz (10) durch den Server (1000) umfasst:
Erzeugen, durch den Server (1000), der kombinierten Lizenz (10), die Lizenzinformationen für die Lizenzen umfasst, die den Lizenzen der ausgewählten Softwareelemente entsprechen, für die ein Lizenzmodus verfügbar ist, der dem ausgewählten Lizenzmodus entspricht.

3. Das computerimplementierte Verfahren zur Erstellung von kombinierten Lizenzen für lizenzpflichtige Softwares und Softwarekomponenten nach Anspruch 1 oder 2 umfasst ferner vor dem Schritt des Initiierens:
Informieren (S1) auf dem Server (1000) durch einen Verwalter des Servers (1000) über Bibliothek-Elemente eines Bibliotheksmoduls (1002) des Servers (1000), wobei die Bibliothek-Elemente eine Liste von Lizenzmodi und für jeden Lizenzmodus einen oder mehrere Lizenzparameter umfassen.

4. Das computerimplementierte Verfahren zur Erstellung von kombinierten Lizenzen für lizenzpflichtige Softwares und Softwarekomponenten nach einem der vorhergehenden Ansprüche umfasst ferner vor dem Schritt des Initiierens:
Erstellen (S2), durch einen Verkäufer (2000A, 2000B, 2000C), einer Lizenz für ein Softwareelement, wobei die Lizenz mindestens einen Lizenzmodus und für jeden Lizenzmodus der Lizenz mindestens einen Lizenzparameter umfasst.

5. Das computerimplementierte Verfahren zur Erstellung von kombinierten Lizenzen für lizenzpflichtige Software und Softwarekomponenten nach Anspruch 4, wenn abhängig von Anspruch 3, wobei der Schritt des Erstellens (S2) einer Lizenz durch einen Verkäufer (2000A, 2000B, 2000C) umfasst:
Auswählen, durch den Verkäufer (2000A, 2000B, 2000C), für die zu erstellende Lizenz mindestens eines Lizenzmodus und eines Lizenzparameters aus den Lizenzmodi und Lizenzparametern, die in dem Bibliotheksmodul (1002) des Servers (1000) aufgelistet sind.

6. Das computerimplementierte Verfahren zum Erstellen von kombinierten Lizenzen für lizenzpflichtige Softwares und Softwarekomponenten nach einem der vorhergehenden Ansprüche umfasst ferner nach dem Schritt des Erzeugens der kombinierten Lizenz (10):
die erzeugte kombinierte Lizenz für den Nutzer (3000) zu erhalten (S4) und sie an ein System zur Überprüfung der Nutzungsrechte von Softwareelementen weiterzuleiten.

7. Ein Server (1000), der für die Erstellung von kombinierten Lizenzen für lizenzpflichtige Softwares und Softwarekomponenten konfiguriert ist, wobei das Verfahren umfasst:
ein Kommunikationsmodul (1001);
ein Bibliotheksmodul (1002);
ein Modul zur Erstellung einer kombinierten Lizenz (1004);
wobei das Modul zur Erstellung einer kombinierten Lizenz (1004) konfiguriert ist, um:
Empfangen einer Anfrage, die Erstellung einer kombinierten Lizenz (10) auf dem Server (1000) zu initiieren;
Empfangen einer Eingabe zum Auswählen einer Vielzahl von Softwareelementen aus einer Liste von Softwareelementen, die aus einer auf dem Server (1000) vorhandenen Liste auswählbar sind, wobei ein Softwareelement eine Software (100, 200, i00) oder eine Softwarekomponente (101, 102, 103, 201, 202, 203, i01, 102, i03) ist, die einer Lizenz unterliegt, wobei eine Lizenz einen Lizenzmodus und einen oder mehrere entsprechende Lizenzparameter umfasst;
Empfangen einer Eingabe zur Auswahl eines Lizenzmodus aus dem oder den Lizenzmodi, die den ausgewählten Softwareelementen entsprechen;
Empfangen einer Eingabe eines Wertes für einen Lizenzparameter, der dem ausgewählten Lizenzmodus entspricht; und
Erzeugen einer kombinierten Lizenz (10), die Lizenzinformationen, die den Lizenzen der ausgewählten Softwareelemente entsprechen, einen ausgewählten Lizenzmodus und einen Lizenzparameterwert enthält.

8. Der Server (1000) nach Anspruch 7, wobei das Modul zur Erstellung einer kombinierten Lizenz (1004) ferner so konfiguriert ist, um:
Erzeugen der kombinierten Lizenz (10), die Lizenzinformationen für die Lizenzen enthält, die den Lizenzen der ausgewählten Softwareelemente entsprechen, für die ein Lizenzmodus verfügbar ist, der dem ausgewählten Lizenzmodus entspricht.

9. Der Server (1000) nach Anspruch 7, wobei das Bibliotheksmodul (1002) ferner konfiguriert ist, zum:
Empfangen einer Informationseingabe der Bibliothek-Elemente des Bibliotheksmoduls (1002) des Servers (1000), wobei die Bibliothek-Elemente eine Liste von Lizenzmodi und für jeden Lizenzmodus einen oder mehrere Lizenzparameter umfassen.

10. Der Server (1000) nach einem der Ansprüche 7 bis 9, der außerdem ein Lizenzerstellungsmodul (1003) umfasst, das konfiguriert ist, zum:
Empfangen einer Eingabe zum Erstellen einer Lizenz für ein Softwareelement, wobei die Lizenz mindestens einen Lizenzmodus und für jeden Lizenzmodus der Lizenz mindestens einen Lizenzparameter umfasst.

11. Der Server (1000) nach Anspruch 10, wenn abhängig von Anspruch 9, wobei das Lizenzerstellungsmodul (1003) weiter konfiguriert ist, um:
für die zu erstellende Lizenz mindestens einen Lizenzmodus und einen Lizenzparameter vorzuschlagen, die aus den Lizenzmodi und Lizenzparametern auszuwählen sind, die in dem Bibliotheksmodul (1002) des Servers (1000) aufgelistet sind.

12. Der Server (1000) nach einem der Ansprüche 7 bis 11, wobei das Modul zur Erstellung einer kombinierten Lizenz (1004) ferner so konfiguriert ist, dass es:
die erzeugte kombinierte Lizenz bereitstellt und sie an ein System zur Überprüfung der Nutzungsrechte von Softwareelementen weiterleitet.

13. Ein System, das für die Erstellung von kombinierten Lizenzen für lizenzpflichtige Software und Softwarekomponenten konfiguriert ist, umfasst:
einen Server (1000) nach einem der Ansprüche 7 bis 12;
einen Nutzer (3000), der von einer natürlichen Person als Benutzer verwendet werden kann, wobei der Nutzer ein Kommunikationsmodul (3001) und ein Benutzerschnittstellenmodul (3002) umfasst.

14. Ein Computerprogramm zur Erstellung von kombinierten Lizenzen für lizenzpflichtige Softwares und Softwarekomponenten, das Anweisungen enthält, die, wenn das Programm von einem Computer ausgeführt wird, diesen dazu veranlassen, die Schritte des Verfahrens nach einem der Ansprüche 1 bis 6 auszuführen.

15. Ein computerlesbares Aufzeichnungsmedium mit Anweisungen zur Erstellung von kombinierten Lizenzen für lizenzpflichtige Softwares und Softwarekomponenten, die, wenn sie von einem Computer ausgeführt werden, diesen dazu veranlassen, die Schritte des Verfahrens nach einem der Ansprüche 1 bis 6 auszuführen.
